# EUROPEAN PATENT SPECIFICATION

(11) **EP 0 631 888 B1**
(45) Date of publication and mention of the grant of the patent: **22.04.1998**
(21) Application number: 94109839.4
(22) Date of filing: 24.06.1994
(51) Int. Cl.: B60B 33/02

(54) **A lockable castor for supporting a movable body, particularly a refuse container**
Feststellbare Lenkrolle zum Stützen eines beweglichen Trägers, insbesondere eines Müllbehälters
Roue à pivot blocable pour supporter un élément mobile, en particulier un récipient à ordures

(30) Priority: 29.06.1993 IT BO930302; 29.06.1993 IT BO930303
(43) Date of publication of application: 04.01.1995
(73) Proprietor: TELLURE ROTA S.p.A., 41043 Formigine (Modena) (IT)
(72) Inventor: Lancellotti, Adolfo, I-41010 Santa Maria di Mugnano (Modena) (IT)
(74) Representative: Cantaluppi, Stefano

(56) References cited:
- EP-A- 0 388 652
- EP-A- 0 394 555
- DE-A- 1 755 789
- DE-U- 9 102 253
- DE-U- 9 212 138

## Description

The present invention relates to a lockable castor for supporting a movable body.

The present invention has been developed with particular regard to a castor of the type with centralized locking which can be fitted in particular, but not exclusively, to a refuse container and has the main characteristics indicated in the preamble to Claim 1 below.

Normally, refuse containers have four castors of the aforementioned type which can be locked simultaneously, for example, by the operation of a control pedal, to prevent the container from moving in its parked condition. For each castor, the locking device simultaneously prevents the wheel from rotating relative to the support fork and prevents the fork from turning relative to the plate for connection to the refuse container or, in general, to the movable body.

A castor of the known type mentioned above is described in German patent DE-C-40 29 299 and comprises a resilient brake plate which is disposed in the space between the cheeks of the support fork and one end of which engages an appendage projecting from the fork towards the axis of rotation of the wheel. The resilient plate is engaged by means of an auxiliary connecting element which is also mounted on the appendage of the fork.

Another castor having the features outlined above is also known from DE-U-9212138.

The locking devices generally used provide for a control unit which is connected to a control bar and is mounted on the plate for fixing the castor to the container for selectively displacing a central, axially movable operating pin, the axis of which coincides with the steering axis of the castor, and the movement of which from a release position to a locking position operates a wheel-braking element, usually a resilient plate connected to the fork supporting the wheel, and simultaneously operates an element for locking the steering of the castor, usually constituted by a device with engagement teeth which engage stop elements fixed to the fork.

Naturally, in order to lock the steering of the castor, the control unit and the central pin must not be able to rotate relative to the fork; in other words, the operating pin must be locked as regards rotation relative to the movable body and hence, in short, relative to the plate supporting the castor, in order to prevent the stresses of the turning of the castor in the locked condition from resulting in a rotating force on the control unit and bending forces on the control bar.

In some known castors, the solution of welding the control unit to the plate for fixing the castor to the movable body has been adopted.

A disadvantage of known lockable castors consists of the fact that they are generally composed of a large number of components which have to be assembled to produce the finished castor.

In addition to the fact that this large number of components involves a higher production cost due to the larger number of operations necessary both for the production of the individual parts and because of the time needed to assemble them, the difficulties both of automating the production and assembly procedures, and of keeping a smaller quantity of replacement parts in stock are naturally increased. Moreover, the larger the number of parts which make up the castor, the greater is the risk of the rejection of parts during production due to their having incompatible working tolerances.

Another disadvantage of the known castors wherein the control unit is welded to the plate for fixing the castor to the movable body consist of the fact that they require additional operations during their production with a consequent increase in the coat and the time needed for production. Moreover, the use of welding involves a series of problems relating to the quality control of the process, to the possibility of having a high percentage of defective parts, and to the onerousness, if not the difficulty, of setting up an automated production cycle for the castor.

The object of the present invention is to overcome the problems of the prior art and, in particular, to provide a lockable castor of the type indicated which is simple and cheap to produce and which, at the same time, is reliable over time and can withstand the stresses to which it is subject in use.

In order to achieve this object, the subject of the present invention is a lockable castor having the characteristics indicated in the characterizing part of Claim 1.

A castor of this type has the advantage that it can be assembled quickly with a minimal number of steps even by unskilled personnel and, moreover, readily lends itself to the setting-up of an automated assembly cycle, all with a considerable reduction in the production times and costs of the castor.

A further improvement of the castor of the present invention in comparison with those of known type consists of the use of a device for locking the steering, comprising a toothed disc which can engage respective stops formed in the cheeks of the support fork by partial-blanking.

This latter characteristic, contributes to the reduction of the steps in the manufacture of the components of the castor, since the stops can be formed during the production of the support fork. Moreover, the steps for the separate assembly of the stops of the toothed disc, which are usually necessary during the production of lockable castors of known type, are eliminated.

Further characteristics and advantages of the present invention will become clear from the detailed description which follows with reference to the appended drawings, given purely by way of non-limiting example, in which:
Figure 1 is a sectioned side view of a castor according to the present invention, taken on the line I-I of Figure 3,
Figure 2 is a partially sectioned front view taken on the arrow II of Figure 1, in which some details have been omitted for clarity of the drawing,
Figure 3 is a view of the castor of Figure 1 taken on the arrow III, from below,
Figure 4 is a section taken on the line IV-IV of Figure 1,
Figure 5 is an exploded, perspective view of a structural detail of the castor according to the present invention.

With reference to the drawings, a castor, generally indicated 1, can be mounted on a movable body, for example, on the lower portion of a refuse bin (not shown in the drawings). The castor 1 has a fixing plate 2 for fixing the castor 1 rigidly to the movable body, a fork 3 associated with the lower portion of the plate 2 being orientable relative thereto about a steering axis A perpendicular to the plate.

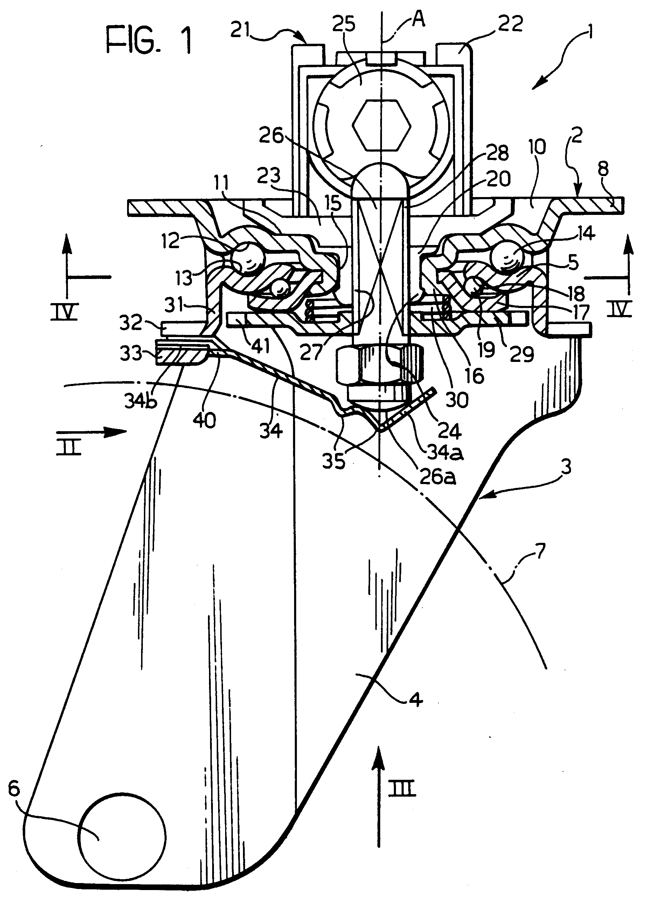

The fork 3 comprises a pair of downwardly-extending cheeks 4 the upper portions of which are interconnected by a base 5 facing the plate 2. The cheeks 4 of the fork 3 support a transverse pin 6 on which a wheel 7, part of which is indicated in broken outline in Figure 1, is mounted.

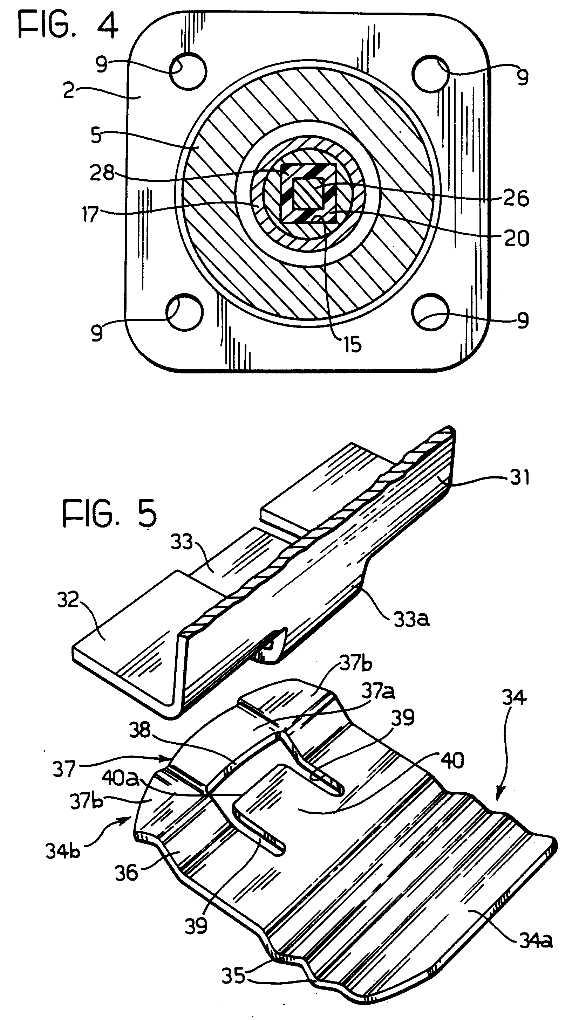

The fixing plate 2 has a peripheral bearing surface 8 with a substantially polygonal outline (see Figures 3 and 4) and has four holes 9 for the passage of bolts or other known means for fixing the plate 2 to the movable body. A central circular portion of the plate 2 is bent towards the fork 3 to form a cup 10 comprising a base wall 11. An annular track 12 is formed on the surface of the base wall 11 which faces the fork 3 (downwards in Figure 1) and, together with a corresponding annular track 13 formed on the upper surface of the base 5, forms a race for a first set of bearing balls 14 which are distributed in a ring around the steering axis A.

In the centre of the base wall 11 there is a square hole 15, the side walls of which extend downwardly, terminating in portions 16 which are bent parallel to the base region 11, forming therewith, and with the side walls of the hole 15, a structure with a transverse U-shaped section for gripping an intermediate disc 17 carrying an annular track 17 which cooperates with a corresponding annular track 18 formed in the base 5 of the fork 3 to form a race for a second set of bearing balls 19 which are also distributed in a ring around the steering axis A.

A control unit 21 for locking the castor 1, mounted on the plate 2 and centred axially with respect to the steering axis A of the castor, has an outer casing 22, preferably of plastics material, comprising an abutment plate 23 which bears on the base wall 11 of the plate 2. The abutment plate 23 is extended by a square shank 20 which is hollow axially and the external side surfaces of which engage the sides of the square hole 15 in the plate 2. The lower end of the shank 20 has a peripheral tooth 24 for snap-engaging the portions 16.

The casing 22 houses a device 25 for manoeuvring an operating pin 26 of substantially square cross-section, which is mounted for sliding in an axial hole 27 in the shank 20 having a square cross-section corresponding to the cross-section of the pin 26. The manoeuvring device 25 is of generally known type and will not be described in detail since it does not fall within the scope of the present invention.

The longitudinal corners of the pin 26 have chamfers 28 for most of their lengths from the upper end of the pin which is operated by the manoeuvring device 25. A toothed disc 29 is slidable on the pin 26 and, for this purpose, has a shaped central hole having the same square profile with chamfered corners, as a cross-section of the pin 26. The downward travel of the toothed disc 29 on the pin 26 is limited by interference with the non-chamfered portion of the cross-section of the pin 26. A helical spring 30, interposed between the toothed disc 29 and the portions 16 of the plate 2, urges the disc 29 against the non-chamfered lower end of the pin 26.

One of the ends of the base 5 of the fork 3 which are disposed between the cheeks 4 is bent and defines a vertical wall 31 extended by a bracket 32 which is oriented at right angles to the wall 31 so as to be substantially parallel to the peripheral bearing surface 8 of the plate 2. An appendage 33 which is equidistant from the cheeks 4, projects from the vertical wall, parallel to the bracket 32 and spaced vertically downwards. The appendage 33 is preferably produced by the partial blanking and bending of a portion of the bracket 32 which is central with respect to the cheeks 4.

A resilient plate 34 mounted on the appendage 33 extends within the space between the cheeks 2 and is inclined downwardly so as to be generally parallel to a plane tangential to the peripheral cylindrical surface of the wheel 7. Near its end 34a facing away from the appendage 33, the resilient plate 34 has a plurality of corrugations or transverse raised portions 35, produced by bending, for cooperating with the peripheral cylindrical surface of the wheel 7 in the operative condition in which the castor 1 is locked so as to prevent it from rotating about the pin 6. The end 34a of the resilient plate 34 is bent transversely to form an edge portion which houses a lower spherical cap-shaped end 26a of the pin 26.

The end 34b of the resilient plate 34, which is connected to the appendage 33, has a transverse step 36 (see Figure 5) which is produced by the transverse bending of the plate 34 and defines a bearing area, generally indicated 37, comprising a central bearing region 37a which is recessed relative to side bearing regions 37b and the width of which is substantially equal to the width of the appendage 33. In the unassembled condition of the plate 34 shown in Figure 5, the distance between the lower surface of the recessed central bearing region 27a and the upper surface of the side bearing regions 27b is greater than the distance between the upper surface of the appendage 33 and the lower surface of the bracket 32.

In the step 36, the resilient plate 34 has a quadrangular slot 38 which is a little wider than the appendage 33 and the shorter sides of which are extended by two longitudinal slits 39 oriented towards the end 34a. The inner edges of the slits 39 define the side edges of a resilient tongue 40 which is integral with the plate 34 and has an end edge 40a defined by one of the longer sides of the slot 38.

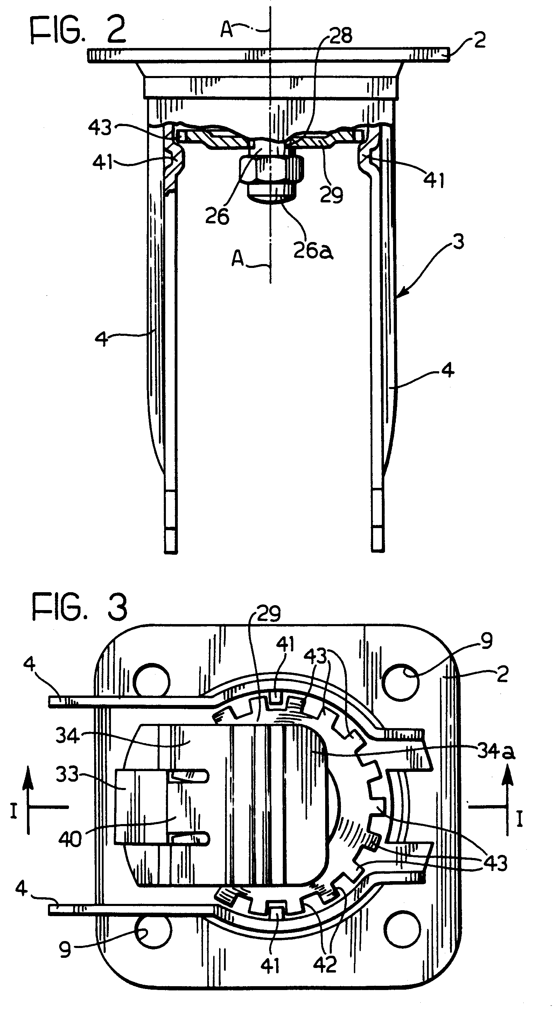

With reference now to Figure 2, two stops 41 which are diametrally opposed with respect to the steering axis A of the castor, and the functions of which will be described below, are formed on the inner surfaces of the cheeks 4 of the fork 3. Each of the stops 41 is formed by partial blanking, by the formation of two parallel vertical slots in the respective cheek 4 and the bending of the material between the vertical slots towards the inside of the fork 3 in a manner such that the overall depth of the stop 41 does not exceed the depths of recesses 42 which alternate with teeth 43 disposed on the periphery of the toothed wheel 29 (see Figure 3). Moreover, the vertical slots are spaced apart by a distance such that the widths of the stops 41 do not exceed the widths of the recesses 42.

During the assembly of the castor 1, after the plate 2 has been fitted on the fork 3 in generally known manner, the prismatic shank 26 of the control unit 21 is snap-engaged in the corresponding prismatic hole 15 in the plate 2 so that the peripheral tooth 24 engages under the portions 16. Any relative rotary movement between the control unit 21, the pin 26, the toothed disc 29 and the plate 2 is prevented by the series of prismatic couplings between the aforesaid elements which couplings are defined, in the embodiment illustrated, by square profiles of the cross-sections but which may satisfactorily be modified to polygonal profiles of another type, for example hexagonal profiles.

The resilient plate 34 is simply snap-fitted, the appendage 33 of the fork 3 being forced through the slot 38. The central bearing region 37a and the side bearing regions 37b are thus forced resiliently against the upper surface of the appendage 33 and against the lower surface of the bracket 32, respectively. During the insertion of the appendage 33 in the slot 38, the resilient tongue 40 slides on the lower surface of the appendage 33 and is deformed resiliently downwards.

The insertion of the appendage 33 in the slot 38 continues until the edge 40a of the resilient tongue 40 reaches the curved portion 33a of the appendage 33. At this point, the tongue 40 snaps resiliently to resume the undeformed configuration in which the edge 40a engages against the curved portion 33a of the appendage 33, as shown in Figure 1, preventing any movement of the end 34b of the plate 33 relative to the fork 3.

When the locking device according to the present invention is in use, the operation of the manoeuvring device 25 in known manner brings about a lowering of the pin 26, the lower end 26a of which acts on the end edge portion 34a of the resilient plate 34, pressing the corrugations 35 against the peripheral cylindrical surface of the wheel 7, stopping it from rotating about the pin 6.

The lowering of the pin 26 simultaneously enables the toothed disc 29 to move downwardly under the action of the spring 30 so that two opposed recesses 42 of the toothed disc are engaged by the stops 41. Since, as indicated above, the prismatic couplings prevent relative rotation between the plate 2 and the toothed disc 29, rotation of the fork 3 carrying the stops 41, relative to the plate 2, will also be prevented, excluding the possibility of the castor 1 turning about the axis A.

The presence of the spring 30 and the fact that the toothed disc 29 can slide on the pin 26 enable the control device 21 to be operated, and hence the pin 26 to be lowered, even when the stops 41 are facing two opposed teeth 43, instead of two recesses 42. In this case, it suffices to turn the wheel 1 slightly about the steering axis A, for example, by rotating the movable body supported by the castor 1 slightly, so that the stops are disposed in a pair of recesses 42. The pressure of the spring 30 against the toothed disc 29 consequently brings about the desired lowering of the toothed disc 29 which is brought to the configuration in which the steering of the castor 1 is locked.

The release of the manoeuvring member 25 enables the pin 26 to return to the position in which the castor 1 is released, by virtue of the resilient return of the resilient plate 34, the edge portion 34a of which urges the pin 26 upwardly. The movement of the pin 26 also entrains the toothed disc 29 upwardly so that the stops 41 are released from their engagement with the recesses 42.

## Claims

1. A lockable castor for supporting a movable body, of the type comprising:
- an element (2) for fixing to the movable body,
- a fork (3) which supports a rotary wheel (7) and is articulated to the fixing element on a steering axis (A),
- a resilient brake plate (34) which is mounted on an appendage (33) of the fork and, in a resiliently deformed operative configuration, can stop the rotation of the wheel (7), said appendage (33) having a first and a second abutment surface, the resilient brake plate (34) being fitted between the first and second abutment surface,
- means (29, 41) for locking the steering of the fork (3) relative to the fixing element (2), and
- operating means (26), associated with the resilient brake plate (34) and with the means (29, 41) for locking the steering, for locking the castor (1),
characterised in that the first and second abutment surface are parallel to one another and the resilient brake plate (34) is force-fitted between the first and second abutment surface.

2. A lockable castor according to Claim 1, characterized in that the second abutment surface is defined by a bracket (32) integral with the fork (3) and disposed in a plane substantially parallel to the element (2) for fixing to the movable body.

3. A lockable castor according to Claim 2, characterized in that the appendage (33) is equidistant from two cheeks (4) of the fork (3) and is formed from a portion of the bracket (32) by partial blanking.

4. A lockable castor according to Claim 1, characterized in that one of the ends (34b) of the resilient brake plate (34) comprises at least one first (37a) and one second (37b) bearing surface which lie in spaced-apart parallel planes and can be moved resiliently towards each other as a result of being forced between the first and second abutment surfaces.

5. A lockable castor according to Claim 1, characterized in that the resilient brake plate (34) comprises a slot (38) for housing the appendage (33) when the castor (1) is in the assembled configuration.

6. A lockable castor according to Claim 1, characterized in that the resilient brake plate (34) comprises a resilient tongue (40) for the snap-fitting of the resilient plate on the appendage (33).

7. A lockable castor according to Claims 5 and 6, characterized in that the slot (38) at least partially defines the outline of the resilient tongue (40).

8. A lockable castor according to Claim 1, characterized in that the means for locking the steering comprise a toothed disc (29) comprising a plurality of peripheral teeth (43) defining a plurality of recesses (42), the toothed disc (29) being operable selectively by the operating means (26) for locking the castor (1), at least one stop element (41) being formed integrally on at least one of the cheeks (4) of the fork (3) for engaging at least one of the recesses (42) when the castor (1) is in the locked configuration.

9. A lockable castor according to Claim 8, characterized in that the stop element (41) is formed by the partial blanking of the cheek (4) of the fork (3) to form two subatantially parallel slots spaced apart by a distance smaller than the widths of the recesses (42), the portion of the cheek (4) between the two slots being bent towards the axis of the toothed disc (29) by a distance smaller than the depths of the recesses (42).

10. A lockable castor according to Claim 8, characterized in that it comprises at least two stop elements (41) formed in respective cheeks (4) of the fork (3) and diametrally opposed with respect to the steering axis (A) of the castor (1).

11. A lockable castor according to claim 1, wherein:
- said means (26,34,29,41) for locking the rotation of the wheel (7) and the steering of the fork (3) relative to the fixing element (2) include an operating pin (26) which is movable axially relative to the steering axis (A),
- the castor comprising control means (21) for selectively operating the operating pin (26), the control means 21 comprising a casing (22) mounted on the fixing element (2),
- the fixing element (2) comprising a central polygonal hole (15), at least one portion of the casing (22) of the control means (21) having a cross section with a polygonal profile for coupling with the central hole (15) in the fixing element (2).

12. A lockable castor according to Claim 11, characterized in that the casing (22) of the control means (21) comprises an axial shank (20) the external surface of which has the polygonal profile in cross-section.

13. A lockable castor according to Claims 12, characterized in that the shank (20) has a polygonal axial hole for the sliding of the operating pin (26), which has a corresponding polygonal cross-section.

14. A lockable castor according to Claims 12, characterized in that the shank (20) has a peripheral end tooth for the snap-fitting of the casing (22) of the control unit (21) in the fixing element.

15. A lockable castor according to Claims 14, characterized in that the shank is made of a resiliently deformable material, preferably a plastics material.

16. A lockable castor according to any one of the preceding claims 11 to 15, characterized in that the polygonal profiles are substantially square profiles.

## Patentansprüche

1. Verriegelbare Lenkrolle zum Tragen eines beweglichen Körpers, von dem Typ, welcher umfaßt:
- ein Element (2) zum Befestigen an dem beweglichen Körper,
- eine Gabel (3), welche ein drehbares Rad (7) trägt und an dem Befestigungselement um eine Steuerachse (A) gelenkig gelagert ist,
- eine federnde Bremsplatte (34), welche an einem Fortsatz (33) der Gabel montiert ist und in einer federnd verformten Betriebskonfiguration die Drehung des Rades (7) stoppen kann, wobei dieser Fortsatz (33) eine erste und eine zweite Stützfläche aufweist und die federnde Bremsplatte (34) zwischen der ersten und zweiten Stützfläche eingesetzt ist,
- Mittel (29, 41) zum Verriegeln der Steuerungsbewegung der Gabel (3) relativ zu dem Befestigungselement (2), und
- Betätigungsmittel (26), welche der federnden Bremsplatte (34) und den Mitteln (29, 41) zum Verriegeln der Sceuerungsbewegung zugeordnet sind, um die Lenkrolle (1) zu verriegeln,
dadurch **gekennzeichnet**, daß die erste und zweite Stützfläche parallel zueinander sind und die federnde Bremsplatte (34) zwischen die erste und zweite Stützfläche gezwängt wird.

2. Verriegelbare Lenkrolle nach Anspruch 1, dadurch **gekennzeichnet**, daß die zweite Stützfläche durch einen Gabelbock (32) definiert ist, der mit der Gabel (3) einstückig ausgebildet und in einer Ebene im wesentlichen parallel zu dem Element (2) zum Befestigen am beweglichen Körper angeordnet ist.

3. Verriegelbare Lenkrolle nach Anspruch 2, dadurch **gekennzeichnet**, daß der Fortsatz (33) von den beiden Wangen (4) der Gabel (3) einen gleichen Abstand hat und aus einem Abschnitt des Gabelbockes (32) durch Teilausstanzung gebildet ist.

4. Verriegelbare Lenkrolle nach Anspruch 1, dadurch **gekennzeichnet**, daß eines der Enden (34b) der federnden Bremsplatte (34) wenigstens eine erste (37a) und eine zweite (37b) Tragezone aufweist, welche in zueinander beabstandeten parallelen Ebenen liegen und als Ergebnis dessen, daß sie zwischen die erste und zweite Stützfläche gezwängt werden, federnd aufeinander zu bewegt werden können.

5. Verriegelbare Lenkrolle nach Anspruch 1, dadurch **gekennzeichnet**, daß die federnde Bremsplatte (34) einen Schlitz (38) zum Aufnehmen des Fortsatzes (33) aufweist, wenn die Lenkrolle (1) die zusammengebaute Konfiguration hat.

6. Verriegelbare Lenkrolle nach Anspruch 1, dadurch **gekennzeichnet**, daß die federnde Bremsplatte (34) eine federnde Zunge (40) für das Verrasten der federnden Platte auf dem Fortsatz (33) aufweist.

7. Verriegelbare Lenkrolle nach den Ansprüchen 5 und 6, dadurch **gekennzeichnet**, daß der Schlitz (38) wenigstens teilweise den Umfang der federnden Zunge (40) definiert.

8. Verriegelbare Lenkrolle nach Anspruch 1, dadurch **gekennzeichnet**, daß die Mittel zum Verriegeln der Steuerungsbewegung eine gezahnte Scheibe (29) aufweisen, welche eine Vielzahl von peripheren Zähnen (43) aufweist, die eine Vielzahl von Ausnehmungen (42) definieren, wobei die gezahnte Scheibe (29) wahlweise durch die Betätigungsmittel (26) zum Verriegeln der Lenkrolle (1) betätigbar ist, wobei wenigstens ein Anschlagelement (41) einstückig an wenigstens einer der Wangen (4) der Gabel (3) ausgebildet ist, um wenigstens in eine der Ausnehmungen (42) einzugreifen, wenn die Lenkrolle (1) ihre verriegelte Konfiguration hat.

9. Verriegelbare Lenkrolle nach Anspruch 8, dadurch **gekennzeichnet**, daß das Anschlagelement (41) durch das Teilausstanzen der Wange (4) der Gabel (3) gebildet wird, wobei zwei im wesentlichen parallele Schlitze gebildet werden, die mit einer Entfernung zueinander beabstandet sind, die kleiner als die Breiten der Ausnehmungen (42) ist, wobei der Abschnitt der Wange (4) zwischen den beiden Schlitzen zur Achse der gezahnten Scheibe (29) hin um einen Abstand gebogen wird, der kleiner als die Tiefen der Ausnehmungen (42) ist.

10. Verriegelbare Lenkrolle nach Anspruch 8, dadurch **gekennzeichnet**, daß sie wenigstens zwei Anschlagelemente (41) aufweist, die in den jeweiligen Wangen (4) der Gabel (3) ausgebildet sind und mit Bezug auf die Steuerachse (A) der Lenkrolle (1) einander diametral gegenüberliegen.

11. Verriegelbare Lenkrolle nach Anspruch 1, bei der:
- die Mittel (26, 34, 29, 41) zum Verriegeln der Verdrehung des Rades (7) und der Steuerungsbewegung der Gabel (3) relativ zu dem Befestigungselement (2) einen Betätigungsstift (26) umfassen, welcher axial relativ zu der Steuerachse (A) bewegbar ist,
- die Lenkrolle Steuerungsmittel (21) zum wahlweisen Betätigen des Betätigungsstiftes (26) aufweist, wobei die Steuerungsmittel (21) ein Gehäuse (22) umfassen, welches auf dem Befestigungselement (2) montiert ist,
- das Befestigungselement (2) ein zentrales polygonales Loch (15) aufweist, wobei wenigstens ein Teil des Gehäuses (22) der Steuerungsmittel (21) einen Querschnitt mit einem polygonalen Profil für eine Kopplung mit dem zentralen Loch (15) in dem Befestigungselement (2) aufweist.

12. Verriegelbare Lenkrolle nach Anspruch 11, dadurch **gekennzeichnet**, daß das Gehäuse (22) der Steuerungsmittel (21) einen axialen Zapfen (20) aufweist, dessen externe Oberfläche im Querschnitt das polygonale Profil aufweist.

13. Verriegelbare Lenkrolle nach Anspruch 12, dadurch **gekennzeichnet**, daß der Zapfen (20) ein polygonales axiales Loch für die Verschiebebewegung des Betätigungsstiftes (26) aufweist, welcher einen entsprechenden polygonalen Querschnitt hat.

14. Verriegelbare Lenkrolle nach Anspruch 12, dadurch **gekennzeichnet**, daß der Zapfen (20) einen peripheren Endzahn für das Einrasten des Gehäuses (22) der Steuerungseinheit (21) in dem Befestigungselement aufweist.

15. Verriegelbare Lenkrolle nach Anspruch 14, dadurch **gekennzeichnet**, daß der Zapfen aus einem federnd verformbaren Material, vorzugsweise aus einem Plastikmaterial hergestellt ist.

16. Verriegelbare Lenkrolle nach einem der vorangehenden Ansprüche 11 bis 15, dadurch **gekennzeichnet**, daß die polygonalen Profile im wesentlichen quadratische Profile sind.

## Revendications

1. Roulette blocable destinée à supporter un corps mobile, du type comprenant :
- un élément (2) pour fixer au corps mobile,
- une fourche (3) qui supporte une roue rotative (7) et qui est articulée à l'élément de fixation sur un axe de direction (A),
- une plaque de freinage (34) élastique qui est montée sur un appendice (33) de la fourche et qui, dans une configuration opérante déformée élastiquement, peut arrêter la rotation de la roue (7), ledit appendice (33) ayant une première et une seconde surfaces de butée, la plaque de freinage (34) élastique étant installée entre les première et seconde surfaces de butée,
- des moyens (29, 41) pour bloquer la direction de la fourche (3) par rapport à l'élément de fixation (2), et
- un moyen (26) de manoeuvre, associé à la plaque de freinage (34) élastique et aux moyens (29, 41) destinés à bloquer la direction, pour bloquer la roulette (1),
caractérisée en ce que les première et seconde surfaces de butée sont parallèles l'une à l'autre et la plaque de freinage (34) élastique est ajustée de façon serrée entre les première et seconde surfaces de butée.

2. Roulette blocable selon la revendication 1, caractérisée en ce que la seconde surface de butée est définie par une patte d'attache (32) d'un seul tenant avec la fourche (3) et disposée dans un plan substantiellement parallèle à l'élément (2) destiné à fixer au corps mobile.

3. Roulette blocable selon la revendication 2, caractérisée en ce que l'àppendice (33) est équidistant de deux joues (4) de la fourche (3) et est formé à partir d'une partie de la patte d'attache (32) par découpage partiel.

4. Roulette blocable selon la revendication 1, caractérisée en ce que l'une des extrémités (34b) de la plaque de freinage (34) élastique comprend au moins une première (37a) et une seconde (37b) surfaces d'appui qui s'étendent dans des plans parallèles écartés l'un de l'autre et qui peuvent être déplacées élastiquement l'une vers l'autre en conséquence de leur poussée de façon forcée entre les première et seconde surfaces de butée.

5. Roulette blocable selon la revendication 1, caractérisée en ce que la plaque de freinage (34) élastique comprend une fente (38) destinée à loger l'appendice (33) lorsque la roulette (1) est dans la configuration assemblée.

6. Roulette blocable selon la revendication 1, caractérisée en ce que la plaque de freinage (34) élastique comprend une languette élastique (40) pour l'ajustement par encliquetage de la plaque élastique sur l'appendice (33).

7. Roulette blocable selon les revendications 5 et 6, caractérisée en ce que la fente (38) définit au moins partiellement le contour de la languette élastique (40).

8. Roulette blocable selon la revendication 1, caractérisée en ce que les moyens destinés à bloquer la direction comprennent un disque denté (29) comprenant une pluralité de dents périphériques (43) qui définissent une pluralité d'évidements (42), le disque denté (29) pouvant être actionné sélectivement par le moyen (26) de manoeuvre pour bloquer la roulette (1), au moins un élément d'arrêt (41) étant formé d'un seul tenant sur au moins l'une des joues (4) de la fourche (3) pour engager au moins l'un des évidements (42) lorsque la roulette (1) est dans la configuration bloquée.

9. Roulette blocable selon la revendication 8, caractérisée en ce que l'élément d'arrêt (41) est formé par le découpage partiel de la joue (4) de la fourche (3) pour former deux fentes substantiellement parallèles écartées l'une de l'autre d'une distance plus petite que les largeurs des évidements (42), la partie de la joue (4) entre les deux fentes étant cintrée en direction de l'axe du disque denté (29) sur une distance plus petite que les profondeurs des évidements (42).

10. Roulette blocable selon la revendication 8, caractérisée en ce qu'elle comprend au moins deux éléments d'arrêt (41) formés dans les joues (4) respectives de la fourche (3) et diamétralement opposés par rapport à l'axe de direction (A) de la roulette (1).

11. Roulette blocable selon la revendication 1, dans laquelle :
- lesdits moyens (26,34,29,41) pour bloquer la rotation de la roue (7) et la direction de la fourche (3) par rapport à l'élément de fixation (2) comprennent une tige de manoeuvre (26) qui est mobile axialement par rapport à l'axe de direction (A),
- la roulette comprenant un moyen (21) de commande destiné à actionner sélectivement la tige de manoeuvre (26), le moyen (21) de commande comprenant un boîtier (22) monté sur l'élément de fixation (2),
- l'élément de fixation (2) comprenant un trou central (15) polygonal, au moins une partie du boîtier (22) du moyen (21) de commande ayant une section transversale avec un profil polygonal pour s'accoupler au trou central (15) situé dans l'élément de fixation (2).

12. Roulette blocable selon la revendication 11, caractérisée en ce que le boîtier (22) du moyen (21) de commande comprend une tige axiale (20) dont la surface externe a le profil polygonal en section transversale.

13. Roulette blocable selon la revendication 12, caractérisée en ce que la tige (20) a un trou axial polygonal destiné au coulissement de la tige de manoeuvre (26), qui a une section transversale polygonale correspondante.

14. Roulette blocable selon la revendication 12, caractérisée en ce que la tige (20) a une dent d'extrémité périphérique destinée à l'ajustement par encliquetage du boîtier (22) de l'unité de commande (21) dans l'élément de fixation.

15. Roulette blocable selon la revendication 14, caractérisée en ce que la tige est réalisée à partir d'une matière élastiquement déformable, de préférence une matière plastique.

16. Roulette blocable selon l'une quelconque des revendications précédentes 11 à 15, caractérisée en ce que les profils polygonaux sont des profils substantiellement carrés.
